# EUROPEAN PATENT APPLICATION

(11) **EP 4 438 860 A1**
(43) Date of publication of application: **02.10.2024**
(21) Application number: 23165331.2
(22) Date of filing: 30.03.2023
(51) Int. Cl.: F01D 17/14, F01K 7/34, F16K 3/08

(54) **EXTRACTION STEAM TURBINE WITH GRID VALVE**

(71) Applicant: Siemens Energy Global GmbH & Co. KG, 81739 München (DE)
(72) Inventor: Kadian, Raju, Vadodara (IN); Panchal, Manan, 390011 Vadodara (IN); Shah, Pankaj, 390025 Vadodara (IN)

(57) **Abstract**

The invention regards to Extraction steam turbine (1), comprising a grid valve (2) for controlling a steam throughput, wherein the grid valve (2) is mounted behind an extraction zone (3) which is located between a high-pressure stage (4) and a low-pressure stage (5), wherein the high-pressure stage (4) is fixed at a first guide blade carriers (6) and the low-pressure stage (5) is fixed at a second guide blade carriers (7) wherein the grid valve (2) consists of a rotatable disk (8) and a stationary disk (9) and is fixed at the second guide blade carrier (7) wherein the rotatable disk (8) and the stationary disk (9) have several inner pockets (10) which are distribute on an inner circular (11) and which can be brought, by rotating the rotatable disk (8), to overlap and builds first openings (12) which guide the steam into rotor blades (13) which are next downstream the grid valve (2) The rotatable disk (8) and the stationary disk (9) have several outer pockets (14) which are distribute on an outer circular (15) and which can be brought, by rotating the rotatable disk (8), to overlap and builds second openings (16) which guide the steam through third openings (17) which are create with the same patter as the pockets (14) in the grid valve (2), on the outer circular (15,) whereby the third openings (17) are part of an cannel (18) in the second guide blade carrier (7), bypassing the rotor blades (13) which are next downstream the grid valve (2).

## Description

In process industries like paper, sugar, pulp, chemical, etc., steam is required to extract from the steam turbine to utilize it in the process of manufacturing products. i.e. Steam is taken out from the opening in the casing of the extraction steam turbine at controlled pressure (as per customer requirement). This steam is used in the process. At the extraction point in the intermediate portion of the extraction steam turbine, the required portion of the steam is extracted, and the remaining steam moves forward in the remaining part of the extraction steam turbine (LP -low-pressure part) to produce power.

Depending upon the power and steam requirement for the process, the extraction steam turbine is also operated at part-load other than design load (mass flow rate at the entry of the turbine for which turbine flow path is designed for optimum thermal efficiency). i.e., the mass flow rate at the entry is less and/or more steam is extracted (referred to as part load).

To control the extraction process and regulate the steam flow in the extraction steam turbine, an extraction valve is used.

There are several types of extraction valve arrangements available to extract steam at the required pressure. Depending upon the mechanical design, they play important role in the thermal efficiency of the turbine at part loads. The most widely used arrangements are as follows:
1. Adaptive stage: Flow passes through aerofoiled vanes. Mass flow rate is controlled by a rotating disk. Vane opening is adjusted by rotation.
2. Grid valve: Flow passes through pockets in a disk. Mass flow rate is controlled by a rotating disk. Pocket opening is adjusted by rotation.
3. Nozzle group control: This arrangement controls mass flow rate through nozzles.
4. Internal valve: This arrangement controls the mass flow rate through the stem.
5. External valve: This arrangement controls the mass flow rate through the stem.

All current solutions have the disadvantage of low efficiency in part load mode.

The objective of the invention is to improve the efficiency of the extraction steam turbine used in the process industries by modifying the extraction valve design, especially in part load mode.

The objective of the invention is solved by the features of claim 1. Advantageous embodiments of the invention, which can be used individually or in combination with each other, are subject of the subclaim.

The inventive extraction steam turbine, comprising a grid valve for controlling a steam throughput, wherein the grid valve is mounted behind an extraction zone which is located between a high-pressure stage and a low-pressure stage, wherein the high-pressure stage is fixed at a first guide blade carriers and the low-pressure stage is fixed at a second guide blade carriers, wherein the grid valve consists of a rotatable disk and a stationary disk and is fixed at the second guide blade carrier, wherein the rotatable disk and the stationary disk have several pockets which are distribute on an inner circular and which can be brought, by rotating the rotatable disk, to overlap and builds first openings which guide the steam into rotor blades which are next downstream the grid valve, is characterized in that the rotatable disk and the stationary disk have several further pockets which are distribute on an outer circular and which can be brought, by rotating the rotatable disk, to overlap and builds second openings which guide the steam through openings which are create with the same patter as the pockets in the grid valve, whereby the openings are part of a bypass in the second guide blade carrier, bypassing the rotor blades which are next downstream the grid valve.

By changing the mechanical design in the grid valve as well as in Guide Blade Carrier (GBC), on which the grid valve is attached, the steam energy losses in the grid valve can reduced significate. This is due to better guidance of the flow through pockets in the grid valve and further through GBC and/or blade group. The flow passing through inner pockets and going into rotor blade which is next to pockets is called RK bypass arrangement and the flow going through GBC passages bypassing blade group which is next to pockets is called Inner bypass. The pocket area is calculated based on the mass flow rate of the steam passing through it. Depending upon power requirement, the grid valve is either in RK bypass condition or in fully open condition (RK bypass and Inner bypass).

Grid valve (LP control valve - two-channel flow) with RK bypass and Inner bypass improves the thermal efficiency of the steam turbine at part load. It also employs simple cost-saving mechanical construction. It can be highly beneficial for extraction steam turbines used in the process industries.

Grid valve employs simple window design with the two-channel flow - mechanical design. This design of the product enables the extraction steam turbine to utilize steam energy (enthalpy) more efficiently compared to the profile design of the valve at part loads. Hence it significantly improves thermal efficiencies resulting in lower specific steam consumption for the required power output at part loads.

An advantageous embodiment of the invention provides that the patter of the pockets is designed in such a matter that depending on the position of the rotatable disk related to the stationary disk, at the minimum, three opening positions are available, wherein in a first position, the grid valve is fully closed, in a second position, the RK Bypass is open, and the Inner Bypass is closed, and in the third position RK Bypass and Inner Bypass open. This arrangement makes the extraction steam turbine more efficient at part loads compared to the existing available solutions in the market. It can be seen as a more economical and efficient solution for extraction steam turbines in the current competitive market.

The invention is explained below with reference to examples of embodiments. It shows:
- Fig. 1: A general view of the extraction steam turbine with extraction valve used in the process industries
- Fig. 2: An example of an inventive grid valve and GBC (Sectional View)
- Fig. 3: A more detail view of the example in Fig. 2 in axial section
- Fig. 4 a-c: Different open positions of the grid valve shown in Fig. 2 and 3.

All figures show only simplified illustrations of the invention that are not true to scale. Identical or functionally identical components are provided with the same reference numbers across all figures.

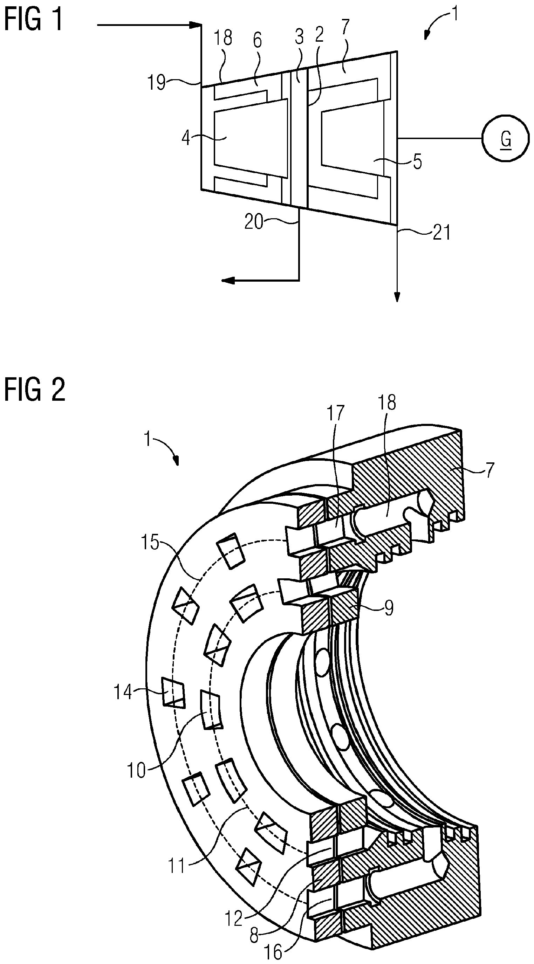

Fig. 1 shows a general view of the extraction steam turbine 1 with extraction valve 2. The extraction steam turbine 1 exists of a turbine casing 18 and at the minimum two stages, a high-pressure stage 4 and a low-pressure stage 5., wherein the high-pressure stage 4 is fixed at a first guide blade carriers 6 and the low-pressure stage 5 is fixed at a second guide blade carriers 7. During the operation mode, the live steam entry the turbine casing 18, via the steam entry 19. In process industries, steam is required with preset steam parameters. This steam, with is taken out from the extraction opening 20 at controlled pressure and is used in the industrial process. The remaining steam moves forward in the remaining part of the turbine (LP -low-pressure part) to produce electrical energy via a generator G and leave the extraction steam turbine 1 by the steam exit 21.

The extraction of the steam takes place within an extraction zone 3 by use of the grid valve 2, which is mounted at the second guide blade carrier 7. The grid valve 2 employs simple window design with the two-channel flow - mechanical design. This new design enables the extraction steam turbine 1 to utilize steam energy (enthalpy) more efficiently compared to the profile design of the valve at part loads. Hence it significantly improves thermal efficiencies resulting in lower specific steam consumption for the required power output at part loads.

Fig. 2 shows a sectional view of an inventive extraction steam turbine 1. The extraction steam turbine 1 has a grid valve 2 which consists of two disks, a rotatable front disk 8 and a stationary rear disk 9.

Both disks 8, 9, have several pockets which are created in the disks 8, 9 in a circular pattern, wherein inner pockets 10 are located on an inner circular 11 and outer pockets 14, are located on an outer circular 15. By rotating the rotatable disk 8 the pockets 10, 14 in both disks 8, 9 can be brought to overlapping. The inner pockets 10 build first openings 12 which guide the steam into rotor blades which are next downstream the grid valve 2.

The outer pockets 14 builds second openings 16 which guide the steam through third openings 17, which are part of cannels 18 in the second guide blade carrier 7, bypassing the rotor blades 13 which are next downstream the grid valve 2. The third openings 17 are in a circular pattern having a pitch distance equal to outer pockets 14.

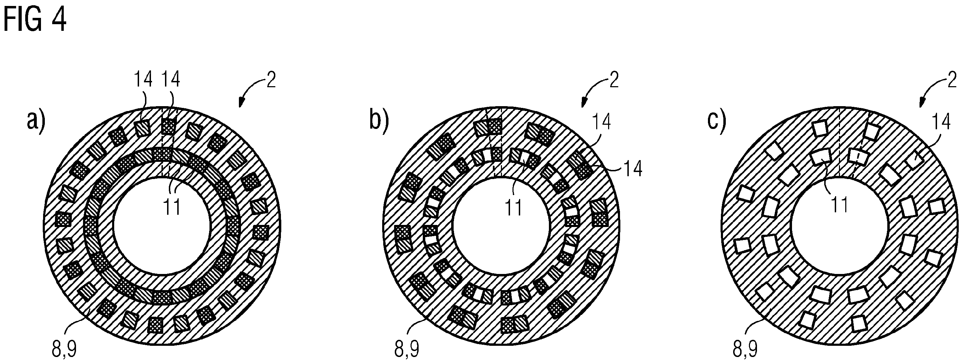

The flow passing through inner pockets 10 and going into rotor blade which is next to pockets is called RK bypass. Arrangement and the flow going through GBC passages bypassing blade group which is next to pockets is called Inner bypass. The pocket area is calculated based on the mass flow rate of the steam passing through it. Depending upon power requirement, the grid valve 2 is either in RK bypass condition or in fully open condition (RK bypass and Inner bypass). Figure 4 shows such kinds of arrangements.

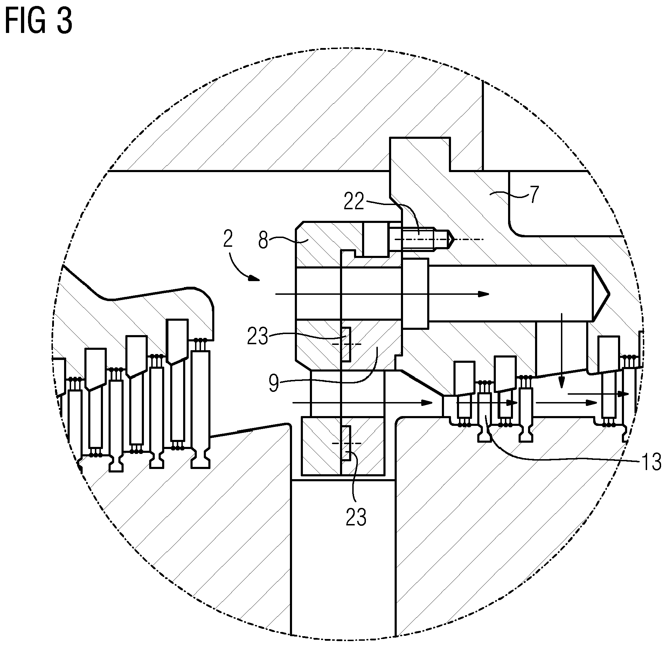

Fig. 3 shows a more detail view of the example in Fig. 2 in axial section. In this figure the inner bypass and the RK bypass are open, so that the steam flows partly to the RK bypass and from there to the rotor blades 13 which are next downstream the grid valve 2 and partly to the inner bypass so that this steam bypassing the rotor blades 13 which are next downstream the grid valve 2. By this figure it can be also seen that the stationary rear disk 9 is fastened to the second guide blade carriers 7 with screws 22. To reducing friction between the rotatable front disk 8 and the stationary rear disk 9 roller bearings 23 are placed between the disks 8, 9. The rotatable front disk position is regulated by a non-shown servo motor.

Fig. 4 a-c shows three different switching positions of the grid valve 2. In Fig. 4 a the inner and the outer pockets 11, 14 in in the stationary rear disk 9 are covered by the rotatable front disk 8, so that the inner bypass and the RK bypass are closed.

In Fig. 4 b the rotatable front disk 8 is moved in that way, that the inner pockets 11 in the rotatable front disk 8 and stationary rear disk 9 are overlapping. In this position of the grid valve 2 the RK bypass is open, whereas the outer pockets 11, in in the stationary rear disk 9 are covered by the rotatable front disk 8, so that the inner bypass is still closed.

In Fig. 4 c the rotatable front disk 8 is moved in that way, that the inner pockets 11 in the rotatable front disk 8 and stationary rear disk 9 as well as the outer pockets 14 in the rotatable front disk 8 and stationary rear disk 9 are overlapping. In this switching position of the grid valve 2 the RK bypass as well as the inner bypass are fully open.

In addition to these positions, other intermediate positions are possible which are not shown here.

In general, a grid valve with a two-channel flow design is mounted on GBC which is next to the extraction point. The pocket design enables it to control the mass flow rate through pocket openings which helps in extracting the steam at the required pressure as well as channeling the flow further in the LP part (the part after extraction) of the turbine. This arrangement makes the turbine more efficient at part loads compared to the existing available solutions in the market. It can be seen as a more economical and efficient solution for extraction turbines in the current competitive market.

## Claims

1. Extraction steam turbine (1), comprising a grid valve (2) for controlling a steam throughput,
wherein the grid valve (2) is mounted behind an extraction zone (3) which is located between a high-pressure stage (4) and a low-pressure stage (5),
wherein the high-pressure stage (4) is fixed at a first guide blade carriers (6) and the low-pressure stage (5) is fixed at a second guide blade carriers (7)
wherein the grid valve (2) consists of a rotatable disk (8) and a stationary disk (9) and is fixed at the second guide blade carrier (7)
wherein the rotatable disk (8) and the stationary disk (9) have several inner pockets (10) which are distribute on an inner circular (11) and which can be brought, by rotating the rotatable disk (8), to overlap and build a first openings (12) which guide the steam into rotor blades (13) which are next downstream the grid valve (2)
**characterized in**
**that** the rotatable disk (8) and the stationary disk (9) have several outer pockets (14) which are distribute on an outer circular (15) and which can be brought, by rotating the rotatable disk (8), to overlap and builds second openings (16) which guide the steam through third openings (17) which are create with the same patter as the pockets (14) in the grid valve (2), on the outer circular (15,) whereby the third openings (17) are part of an cannel (18) in the second guide blade carrier (7), bypassing the rotor blades (13) which are next downstream the grid valve (2).

2. Extraction steam turbine (1), according to claim 1, **characterized in**
**that** the patter of the pockets (10, 14) is designed in such a matter that depending on the position of the rotatable disk (8) related to the stationary disk (9), at the minimum, three opening positions are available,
wherein:
- in a first position, the grid valve (2) is fully closed
- in a second position, the second openings (16) are open, and the first openings (12) are closed
- in a third position the first openings (12) and the second openings (16) are open.
